# EUROPÄISCHE PATENTANMELDUNG

(11) **EP 3 002 387 A1**
(43) Veröffentlichungstag der Anmeldung: **06.04.2016**
(21) Anmeldenummer: 14187324.0
(22) Anmeldetag: 01.10.2014
(51) Int. Cl.: E04F 15/02, C09D 5/20, C09J 5/02, C09J 175/00, C09J 179/00

(54) **Primer für abziehbare Beschichtungen**

(71) Anmelder: Sika Technology AG, 6340 Baar (CH)
(72) Erfinder: Urban, Claus, 71640 Ludwigsburg (DE)
(74) Vertreter: Sika Patent Attorneys

(57) **Zusammenfassung**

Die Erfindung betrifft einen Bodenaufbau auf einem Untergrund 1 umfassend eine Grundierung 2 und einen über der Grundierung befindlichen Bodenbelag 3 umfassend eine Bodenbeschichtung oder eine Verklebung, wobei die Grundierung 2 aus einem Schmelzkleber ist.

Der Bodenaufbau eignet sich insbesondere für einen Kunstharzboden oder einen verklebten Parkett. Der Bodenaufbau ermöglicht es, den Bodenbelag bei Bedarf bei Raumtemperatur durch einfaches Abziehen wieder zu entfernen. Der Ablösevorgang kann durch Erwärmen unterstützt werden.

## Beschreibung

### Technisches Gebiet

Die Erfindung betrifft Bodenbeläge umfassend Bodenbeschichtungen wie Kunstharzböden oder Verklebungen wie verklebter Parkett und das Entfernen derselben.

### Stand der Technik

Es gibt eine Vielzahl von unterschiedlichen Konstruktionen, die als Bodenbeläge zum Einsatz kommen. Beispielsweise werden hierfür Flächenmaterialien wie Parkett verwendet, die mit einer Verklebung fixiert werden. In letzter Zeit werden vermehrt Kunstharzböden als Bodenbeläge verwendet.

Untergründe, die mit einer Bodenbeschichtung oder Verklebung versehen werden sollen, werden häufig zur Vorbereitung mit einer Grundierung versehen. Die Grundierung wird auch als Primer bezeichnet und dient z.B. zur Bereitstellung einer glatten Oberfläche und/oder zur Verbesserung der Haftung der anschließend aufzubringenden Schichten.

Zur Erneuerung von Bodenbeschichtungen ist es in der Regel erforderlich, die alte Bodenbeschichtung zu entfernen. Dies ist bei vielen Bodenbeschichtungen sehr aufwändig, insbesondere bei solchen, die durch Auftragen eines flüssigen Materials gebildet werden.

Flüssig aufgetragene Bodenbeschichtungen weisen gegenüber flächenförmigen Bodenbeschichtungen wie z.B. Bahnen- oder Verlegeware den Vorteil auf, dass sie fugenlos aufgebracht werden können, sich an Unebenheiten des Untergrunds anpassen und bezüglich Dicke und Widerstandsfähigkeit maßgeschneidert werden können. Ein Nachteil von flüssig aufgetragenen Bodenbeschichtungen ist, dass sie, nachdem sie einmal angebracht sind, sehr schwer zu entfernen sind.

Dies gilt insbesondere für Kunstharzböden. Derzeit werden Kunstharzböden mechanisch entfernt, z.B. durch Schleifen, Fräsen oder Strahlen. Dies erfordert Werkzeuge und ist arbeits- und zeitintensiv. Außerdem findet bei einer solchen Entfernung eine unerwünschte Staubentwicklung statt.

Ähnliche Probleme können sich ergeben, wenn die Bodenbeläge Flächenmaterialen umfassen, die mittels Kleber auf dem Untergrund befestigt werden. Auch diese Klebschichten sind häufig schlecht zu entfernen.

Lösungen nach dem Stand der Technik für das Problem, einmal aufgebrachte Bodenbeschichtungen wieder leicht zu entfernen, basieren auf Beschichtungen, denen haftungsvermindernde Additive, wie z.B. Detergentien, Wachse, Silikonharze oder dergleichen, zugesetzt werden. In diesen Fällen wird die Beschichtung selbst modifiziert. Dies führt häufig zu verminderten Eigenschaften der Beschichtung wie z.B. schlechten Oberflächen, reduzierter Härte oder reduzierter Temperatur- oder Chemikalienstabilität. Solche Beschichtungen sind daher oft nur als vorübergehender Schutz gedacht.

So wird z.B. in der WO 2011/037052 bzw. US 2012/0252958 eine abziehbare Beschichtung auf Polyurethanbasis für Böden beschrieben. Diese Beschichtungen werden ähnlich wie Bohnerwachs auf bereits vorhandene Bodenbeläge aufgebracht. Eine leichtere Entfernung der Bodenbeläge selbst wird dadurch nicht ermöglicht.

### Darstellung der Erfindung

Die Aufgabe der vorliegenden Erfindung bestand daher in der Bereitstellung von Bodenaufbauten mit Bodenbelägen umfassend Bodenbeschichtungen oder Verklebungen, bei denen nach dem Einbau nach Bedarf ein Enthaften oder Entfernen der alten Bodenbeläge erleichtert bzw. ermöglicht wird, ohne dass stauberzeugende Arbeiten, wie z.B. Schleifen, Fräsen oder Strahlen, erforderlich sind. Dies ist insbesondere für flüssig aufgetragene Beschichtungen bei Bodenbeschichtungen wie Kunstharzböden oder bei Klebschichten wie in verklebtem Parkett wünschenswert.

Desweiteren sollten für den Bodenaufbau die herkömmlichen Bodenbeschichtungen möglichst ohne große Modifikation einsetzbar sein, um die günstigen Eigenschaften der Beschichtungssysteme beizubehalten und auf kostengünstige Handelsprodukte zurückgreifen zu können. Es sollte auch eine mögliche Wiederverwertbarkeit der Materialien berücksichtigt werden.

Die Aufgabe konnte überraschenderweise dadurch gelöst werden, dass ein Schmelzkleber als Grundierung (Primer) bei einem üblichen Bodenaufbau wie einem Kunstharzboden oder einem verklebten Parkett verwendet wurde.

Die Erfindung betrifft daher einen Bodenaufbau auf einem Untergrund 1 umfassend eine Grundierung 2 und einen über der Grundierung befindlichen Bodenbelag 3 umfassend eine Bodenbeschichtung und/oder eine Verklebung, wobei die Grundierung aus einem Schmelzkleber besteht.

Zwischen dem Untergrund und der Schmelzklebergrundierung kann optional eine Vorgrundierung zwischengeschaltet werden. Ferner kann gegebenenfalls auf dem Bodenbelag eine Versiegelung aufgebracht werden.

Es wurde überraschenderweise festgestellt, dass Bodenbeschichtungen oder Verklebungen, die auf einer Schmelzklebergrundierung aufgebracht werden, manuell ohne Zuhilfenahme von Werkzeugen oder Chemikalien wieder entfernt oder "abgezogen" werden können. Die Beschichtungen bzw. Verklebungen können rein physikalisch abgelöst werden. Erstaunlicherweise gelingt die Ablösung der Bodenbeschichtungen und Verklebungen bereits bei Raumtemperatur. Durch Erwärmen kann die Ablösung noch unterstützt werden. Vorteile des erfindungsgemäßen Bodenaufbaus bestehen in dem relativ geringen Arbeits- und Zeitaufwand für das Entfernen der Bodenbeschichtung oder Verklebung im Vergleich zu konventionellen Methoden wie Schleifen, Fräsen oder Strahlen, und der damit verbundenen Zeit- und Kostenersparnis sowie dem Nichtanfallen von Staub.

Die Staubentwicklung kann speziell in Innenräumen, z. B. in Krankenhäusern, von großem Nachteil sein, z.B. hinsichtlich Verschmutzung und Gesundheit. Ferner besteht die Möglichkeit der stofflichen Weiterverwendung der entfernten Beschichtung (Recycling), was mit dem Staub, der bei den konventionellen Methoden entsteht, nicht möglich ist.

Die Erfindung betrifft ferner die Verwendung eines Schmelzklebers als Grundierung bei einem Bodenaufbau, sowie ein Verfahren zur Herstellung des erfindungsgemäßen Bodenaufbaus und ein Verfahren zur Entfernung des Bodenbelags dieses Bodenaufbaus, wie in den weiteren unabhängigen Ansprüchen angegeben. Bevorzugte Ausführungsformen der Erfindung sind in den unabhängigen Ansprüchen wiedergegeben.

Die nachstehenden Erläuterungen beziehen sich immer sowohl auf den Bodenaufbau als auch auf die Verwendung und die Verfahren gemäß der Erfindung soweit anwendbar.

### Kurze Beschreibung der Zeichnung

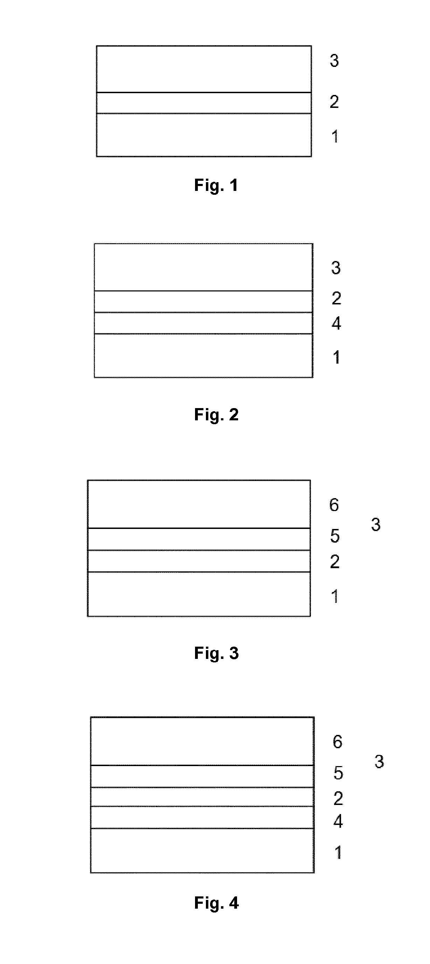

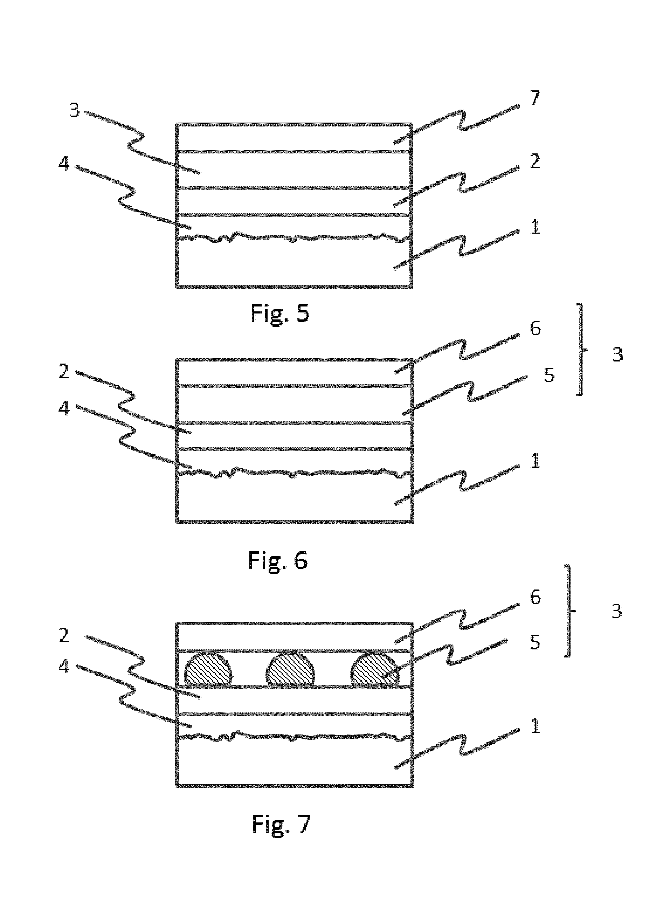

Die Figuren 1 bis 7 geben schematisch Bodenaufbauten gemäß der Erfindung wieder.

### Weg zur Ausführung der Erfindung

Der erfindungsgemäße Bodenaufbau umfasst auf einem Untergrund 1 eine Grundierung 2 und einen über der Grundierung befindlichen Bodenbelag 3 umfassend eine Bodenbeschichtung und/oder eine Verklebung, wobei die Grundierung aus einem Schmelzkleber ist.

Als Untergrund für den Bodenaufbau eignen sich prinzipiell alle Untergründe oder Substrate, auf denen Bodenbeläge üblicherweise aufgebracht werden, z.B. solche, die in Bauwerken für den Bodenaufbau verwendet werden. Auf mineralische Bindemittel basierende Untergründe oder auf Holz basierende Untergründe sind z.B. geeignet. Beispiele für geeignete Untergründe sind z.B. Beton, Estrich, Zement, Faserzement, Holz wie Spanplatten, Fliesen, Glas, Trockenestrich, Gussasphalt oder Altbeschichtungen. Die Untergründe können gegebenenfalls eine bereits vorhandene Grundierung aufweisen.

Gegebenenfalls kann der Untergrund mit einer Vorgrundierung versehen sein, die zwischen dem Untergrund und der Schmelzklebergrundierung angeordnet ist. Der Einsatz einer optionalen Vorgrundierung kann z.B. zweckmäßig sein bei saugfähigen Untergründen oder insbesondere bei Untergründen mit rauer Oberfläche. Desweiteren unterstützt die Vorgrundierung den Ablösevorgang zusätzlich. Es können als Vorgrundierung, falls eingesetzt, eine oder mehrere Vorgrundierungsschichten aufgebaut werden.

Für die Vorgrundierung können handelsübliche Grundierungsmittel verwendet werden, die dem Fachmann bekannt sind. Als Grundierungsmittel eignen sich z.B. Kunst¬harzdispersionen auf wässriger Basis oder Reaktions¬harz-mischungen, mit denen eine Kunstharz-Vorgrundierung erhalten werden kann. Übliche Kunstharze bzw. Reaktionsharze in solchen Grundierungsmitteln sind z.B. Alkydharze, Acrylharze, Epoxidharze oder Polyurethane.

Als mögliche Additive, die das Grundierungsmittel bzw. die Vorgrundierung enthalten kann, kommen z.B. Füllstoffe, Farbpigmente, Farbstoffe, Thixotropierhilfsmittel, Entlüftungshilfsmittel, Haftvermittler wie beispielsweise Silane, in Betracht. Als geeignete Handelsprodukte, die zur Herstellung der optionalen Vorgrundierung eingesetzt werden können, kann beispielhaft Sikafloor®-161 der Sika Deutschland GmbH genannt werden, welches ein zweikomponentiges Epoxidharzsystem ist.

Auf den Untergrund oder, falls verwendet, auf der Vorgrundierung wird erfindungsgemäß ein Grundierung aus einem Schmelzkleber aufgebracht. Schmelzkleber werden auch als Schmelzklebstoffe oder Heißschmelzkleber (englisch "hot melt adhesive") bezeichnet. Grundierungen werden auch als Primer bezeichnet. Für die Schmelzkleber-Grundierung können alle handelsüblichen Schmelzkleber eigesetzt werden. Die Grundierung kann aus einem oder mehreren Schmelzklebern in einer oder mehreren Schichten sein. Aus praktischen Erwägungen ist es aber in der Regel zweckmäßig, die Grundierung aus einer Schmelzkleberschicht zu bilden.

Bei dem Schmelzkleber kann es sich um einen reaktiven Schmelzkleber oder einen nicht-reaktiven Schmelzkleber, d.h. einen physikalisch abbindenden Schmelzkleber, handeln, wobei nicht-reaktive Schmelzkleber bevorzugt sind. Schmelzkleber liegen bei Raumtemperatur (23°C) einkomponentig in fester Form vor. Gewöhnlich basieren sie auf thermoplastischen Polymeren als Hauptbestandteil. Beispiele für Polymere, die in Schmelzklebern als Hauptbestandteil enthalten sind, sind z.B. Ethylen-Vinylacetat-Copolymere, Polyolefine, Polyester und Polyamide. Daneben kann der Schmelzkleber gegebenenfalls Additive enthalten. Beispiele für Additive, die im Schmelzkleber enthalten sein können, sind klebrigmachende Harze, Weichmacher, Wachse, Stabilisatoren, Antioxidantien, Füllstoffe und Pigmente.

Schmelzkleber sind im Handel in vielen Varianten erhältlich. Beispielhaft seien die Schmelzklebersticks Cristal^{®} von Steinel, Deutschland, erwähnt.

Der Schmelzkleber wird als Grundierung, bevorzugt in Form einer dünnen Beschichtung, verwendet, die das Entfernen bzw. die Enthaftung des Bodenbelags, insbesondere der Bodenbeschichtung oder der Verklebung, bei Raumtemperatur ermöglichen kann. Die Auftragsmenge der Grundierung aus Schmelzkleber, bezogen auf das Trockengewicht, kann in breiten Bereichen variieren und z.B. im Bereich von 5 bis 500 g/m², vorzugsweise von 10 bis 100 g/m², liegen.

Der Schmelzkleber kann nach den herkömmlichen Auftragsverfahren auf den Untergrund oder, falls verwendet, die Vorgrundierung aufgebracht werden. Herkömmliche Auftragsverfahren sind z.B. Walzen- oder Sprühapplikation aus der Schmelze. Für die manuelle Dosierung eignen sich z.B. gebräuchliche Schmelzkleberpistolen, Sprühköpfe oder Sprühpistolen. Schmelzkleber sind auch in vorgefertigten Formen erhältlich, z.B. als Schmelzkleberfolien. Solche Folien können einfach auf der Unterlage bzw. der Grundierung ausgelegt werden, wobei die Anbindung z.B. durch thermische Behandlung, z.B. mit einem Fön, verstärkt werden kann.

Eine andere Möglichkeit besteht darin, den Schmelzkleber gesondert aufzuschmelzen oder in einem organischen Lösungsmittel zu lösen. Die Schmelze oder die flüssige Mischung können dann mit üblichen Mitteln verteilt werden, z.B. mit einem Pinsel, einer Bürste oder einer Rolle oder einfaches Gießen oder Sprühen. Die Auflösung in organischem Lösungsmittel ist wegen der Lösungsmittelemission aus umweltbedingten und gesundheitlichen Gründen für gewerbliche Anwendungen in der Regel weniger geeignet.

Auf die Schmelzkleber-Grundierung befindet sich erfindungsgemäß ein Bodenbelag umfassend eine Bodenbeschichtung und/oder eine Verklebung. Die Verklebung kann eine vollflächige oder teilflächige Klebschicht sein. Die Bodenbeschichtung oder Klebschicht umfasst mindestens eine Bodenbeschichtung bzw. Klebschicht, kann aber auch zwei oder mehr dieser Schichten umfassen. Der Bodenbelag kann auch eine oder mehrere Schichten aus einem Flächenmaterial umfassen.

Die Bodenbeschichtung oder Verklebung bzw. Klebschicht umfasst oder ist bevorzugt mindestens eine Schicht, insbesondere eine Kunstharzschicht oder eine voll- oder teilflächig applizierte Klebschicht, die durch Auftragen und Härten eines flüssigen oder pastösen Materials gebildet ist. Diese Schicht ist bevorzugt unmittelbar über der Grundierung angeordnet.

Als flüssige oder pastöse Materialien für die Bildung der Schicht, insbesondere der Kunstharzschicht oder Klebschicht, können z.B. Reaktionsharze bzw. Klebstoffe verwendet werden. Die Verwendung von Reaktionsharzen zur Herstellung von Kunstharzböden ist bevorzugt.

Kunstharzschichten, die auch als Reaktionsharzschichten bezeichnet werden, werden aus einem Reaktionsharz, das gegebenenfalls Additive enthalten kann, gebildet. Zur Bildung der Kunstharzschichten werden Reaktionsharze, gewöhnlich mithilfe eines Härters, der auch Beschleuniger enthalten kann, zur Reaktion gebracht. Die Reaktion führt zur Härtung des Reaktionsharzes.

Solche Reaktionsharz-Beschichtungszusammensetzungen sind in großer Vielfalt im Handel erhältlich. Häufig handelt es sich um Zweikomponentensysteme, bei denen die eine Komponente das Reaktionsharz und die andere den Härter oder Beschleuniger umfasst. Ferner werden auch 3- oder höherkomponentige Systeme eingesetzt. Es sind auch ein¬komponentige Systeme möglich. Bei mehrkomponentigen Systemen werden die Komponenten vor Gebrauch gemischt und dann verarbeitet.

Beispiele für geeignete herkömmliche Reaktionsharze zur Bildung der Kunstharzschicht sind Epoxidharze, Polyurethane, Polyharnstoffe, Polyacrylate, Polymethacrylate und Gemische von Polyurethanen und Polyharnstoffen, Harze auf Basis silan-terminierter Präpolymere (STP) sowie Kunstharze auf Basis polymermodifizierter zementöser Systeme. Letztere enthalten auch Anteile von anorganischem Bindemittel wie Zement, die auch z.B. als zementöse Hybridsystemen und polymervergütete zementöse Mischungen (PCC "polymer cement concrete") bekannt sind.

Die Reaktionsharz-Beschichtungszusammensetzung bzw. die Kunstharzschicht kann nach Bedarf ein oder mehrere Additive enthalten. Durch Zugabe von Additiven können z.B. die Viskosität oder die Eigenschaften der Kunstharzschichten, z.B. die mechanischen Eigenschaften oder die Farbe, eingestellt werden. Beispiele für mögliche Additive sind organische Lösemittel, Wasser, farbgebende Mittel, wie Farbstoffe, Pigmente oder Farbchips, Füllstoffe, Fasern, Glashohlkugeln, Emulgatoren, Thixotropiermittel, Filmbildehilfsmittel, Verlaufshilfsmittel, Entlüftungshilfsmittel sowie Antiabsetzmittel.

Als Handelsprodukte für Reaktionsharzsysteme zur Bildung der Kunstharzschichten können beispielhaft Sikafloor®-330, Sikafloor®-350 oder Sikafloor®-264 genannt werden.

Es ist bevorzugt, dass eine Kunstharzschicht unmittelbar über der Schmelzkleber-Grundierung angeordnet ist. In einer bevorzugten Ausführungsform umfasst oder ist der Bodenbelag eine oder mehrere Kunstharzschichten. Polyurethan-Kunstharzschichten sind bevorzugt. Besonders bevorzugt handelt es sich daher bei dem Bodenaufbau um einen Kunstharzboden, der auch als Reaktionsharzboden bezeichnet wird.

Der Bodenbelag kann zusätzlich oder bevorzugt alternativ eine Verklebung bzw. eine Klebschicht umfassen. Zur Bildung der Klebschicht können alle herkömmlichen Kleber bzw. Klebstoffe eingesetzt werden, insbesondere flüssige oder pastöse Kleber. Es ist bevorzugt, dass die Klebschicht unmittelbar über der Schmelzkleber-Grundierung angeordnet ist. Die Klebschicht kann aus einer Klebschicht oder aus zwei oder mehr aufeinander aufgebrachten Klebschichten bestehen.

Die Klebschicht kann vollflächig oder teilflächig ausgebildet sein. Bei einer teilflächigen Klebschicht sind nur Teile der darunterliegenden Gesamtfläche, z.B. die Grundierung aus Schmelzkleber, bedeckt. Der vollflächige oder teilflächige Auftrag von Klebstoffschichten zur Verklebung ist dem Fachmann bestens bekannt.

Bei einem vollflächigen Auftrag wird der Klebstoff auf der gesamten zu verklebenden Fläche appliziert. Beim teilflächigen Auftrag des Klebschicht kann der Kleber z.B. in Form von Klebstoffraupen appliziert werden. Der Klebstoff kann z.B. in parallel angeordneten, voneinander beabstandeten länglichen Raupen über die zu verklebende Fläche appliziert werden. Die Raupen können z.B. in Längsrichtung kontinuierlich oder mit Unterbrechungen appliziert werden. Der teilflächige Auftrag kann natürlich auch in einem anderen Muster erfolgen, z.B. die Applikation von Klebstoffraupen in einem Gitter- oder Rautenmuster. Der Fachmann kann für die jeweilige spezielle Anwendung die geeignete Auftragsform ohne weiteres selbst oder anhand der Herstellervorschriften auswählen.

Als Klebstoffe können übliche Klebstoffe für die Verklebung von Flächenmaterialien eingesetzt werden. Typische Klebstoffe sind Klebstoff-Dispersionen, Polyurethan-Klebstoffe, Epoxidharz-Klebstoffe und zementhaltige Klebstoffe. Als Handelsprodukte für geeignete Kleber zur Bildung der Verklebungen bzw. Klebschichten können beispielhaft Parkettklebstoffe, z.B. die Sikaflex^{®}-Kleber und SikaBond®-Kleber für Parkettbodenbeschichtungen von Sika Deutschland GmbH, genannt werden.

Die Klebschicht kann insbesondere dazu dienen, ein Flächenmaterial für den Bodenbelag zu fixieren. In einer bevorzugten Ausführungsform umfasst der Bodenbelag daher ein verklebtes Flächenmaterial, insbesondere ein Flächenmaterial, das mittels einer dazwischenliegenden vollflächig oder teilflächig applizierten Klebschicht auf der Grundierung angeordnet oder fixiert ist.

Beispiele für geeignete Flächenmaterialien sind Verlegeware, Parkett, Laminat, Kunststoffbahnen oder-platten, z.B. aus PVC, Polyolefin, Kautschuk, Linoleum oder Kork, wobei Parkett bevorzugt ist. Bei dem Bodenbelag umfassend Verklebungen handelt es sich bevorzugt um einen verklebten Parkettboden.

Der Bodenbelag umfasst vorzugsweise Schichten, insbesondere Bodenbeschichtungen wie Kunstharzschichten oder teilflächige oder vollflächige Klebschichten, mit guter Elastizität. Die Bruchstabilität der Beschichtungen hängt u.a. von der Elastizität und der Schichtdicke der Schicht ab, wobei eine höhere Elastizität und eine höhere Schichtdicke die Bruchstabilität verbessern. Damit die Beschichtungen beim Ablösen nicht brechen, weisen sie bevorzugt eine ausreichende Elastizität und Filmdicke auf. Auf diese Weise können die Bodenbeschichtung oder die Klebschicht zur Entfernung einfach abgezogen werden. Bei gegebener Elastizität der Beschichtung kann dies z.B. durch Einstellung der Schichtdicke berücksichtigt werden.

Die erfindungsgemäß eingesetzte Grundierung aus Schmelzkleber kann auch bei Bodenbelägen mit starren, d.h. brechenden Beschichtungen, z.B. auf Basis von Epoxyharzen oder zementösen Kunstharzen, die gewöhnlich durch Fräsen entfernt werden müssen, einen Vorteil bieten, da auch hier die Enthaftung erleichtert wird. In diesem Fall könnte die Beschichtung mit einem geeigneten Werkzeug in Stücken abgehebelt werden, was bei solchen Beschichtungen ohne Schmelzkleber-Grundierung nicht möglich wäre.

Der Bodenbelag weist vorzugsweise eine Gesamtschichtdicke von mindestens 0,5 mm, bevorzugter mindestens 1,0 mm auf. Die Gesamtschichtdicke des Bodenbelags kann je nach Ausführungsart in weiten Bereichen variieren.

Sofern der Bodenbelag eine Bodenbeschichtung, insbesondere eine oder mehrere Kunstharzschichten, umfasst oder ist, kann die Gesamtdicke des Bodenbelags z.B. im Bereich von 1 bis 5 mm liegen. Sofern der Bodenbelag eine Verklebung bzw. eine Klebstoffschicht umfasst, wird der Klebstoff bei vollflächigem Auftrag z.B. in einer Menge von 200 - 1500 g/mm² appliziert, wobei die Dichte des Klebstoffs bevorzugt im Bereich von 1,0 - 1,3 kg/l liegt. Bei teilflächigem Auftrag, z. B. in Form von Klebstoffraupen, beträgt die Auftragsmenge z.B. 500 - 1500 g/mm². Die Raupenhöhe beträgt dabei z.B. 2 - 15 mm.

Da es von Vorteil ist, wenn die Bodenbeschichtungen oder Verklebungen ohne Bruch abgezogen werden können, kommt statt oder zusätzlich zur Erhöhung der Schichtdicke die Aufnahme von Fasern oder der Einbau von Gewebe in die Schicht, insbesondere in die Bodenbeschichtung, in Betracht, um die mechanische Stabilität zu erhöhen.

In einer optionalen Ausführungsform kann der Bodenaufbau ferner eine Versiegelung über dem Bodenbelag aufweisen. Solche Versiegelungen sind in der Technik üblich. Die Versiegelung kann aus einer oder mehreren aufeinander aufgebrachten Schichten bestehen. Für die Versiegelung können Beschichtungszusammensetzungen umfassend Reaktionsharze eingesetzt werden. Beispiele für geeignete Reaktionsharze sind dieselben, die vorstehend für die Kunstharzschichten genannt wurden. Ein Beispiel für ein Handelsprodukt zur Herstellung geeigneter Versiegelungen ist Sikafloor®-310, eine zweikomponentige Polyurethan-Beschichtungszusammensetzung.

Der Bodenbelag kann gegebenenfalls vor Auftrag der Versiegelung abgesandet werden. Das Versiegelungsmittel, z.B. Sikafloor®-310, kann z.B. in einer Menge von 0,1 bis 0,8 g/m² aufgebracht werden. Eine Versiegelung kann insbesondere bei Kunstharzschichten umfassenden Bodenbelägen zweckmäßig sein. Eine Versiegelung kann natürlich auch bei einem Bodenbelag umfassend ein verklebtes Flächenmaterial eingesetzt werden.

Die Erfindung betrifft auch ein Verfahren zur Herstellung des erfindungsgemäßen Bodenaufbaus auf dem Untergrund. Das Verfahren umfasst a) die Grundierung des Untergrunds mit dem Schmelzkleber und b) das Aufbringen des Bodenbelags umfassend die Bodenbeschichtung und/oder die Verklebung auf die Grundierung, wobei der Untergrund gegebenenfalls vor der Grundierung mit dem Schmelzkleber mit einer Vorgrundierung versehen wird und/ oder der Bodenbelag gegebenenfalls mit einer Versiegelung versehen wird.

In einer bevorzugten Ausführungsform umfasst das Aufbringen des Bodenbelags b1) das Auftragen einer Reaktionsharz-Beschichtungszusammensetzung auf die Schmelzkleberschicht und Härten unter Bildung einer Kunstharzschicht oder b2) das voll- oder teilflächige Auftragen eines Klebers auf die Schmelzkleberschicht und Aufkleben eines Flächenmaterials auf die Klebschicht.

Alle Verfahrensschritte sind dem Fachmann bestens vertraut und können auf die übliche Weise durchgeführt werden. Einzelheiten zu den Komponenten und Verfahrensschritten wurden bereits vorstehend erläutert.

Die Erfindung betrifft auch die Verwendung des Schmelzklebers zur Grundierung oder Beschichtung eines Untergrundes bei der Herstellung eines Bodenbelags umfassend eine Bodenbeschichtung oder eine Verklebung auf dem Untergrund. Die Schmelzkleber-Grundierung ist dabei zwischen dem Untergrund und dem Bodenbelag angeordnet. Die erfindungsgemäße Verwendung eignet sich zur Bildung von Bodenbelägen umfassend Bodenbeschichtungen oder Verklebungen, die nach Fertigstellung ablösbar oder abziehbar sind.

Der erfindungsgemäße Bodenaufbau weist den Vorzug auf, dass die Bodenbeschichtung oder Verklebung nach Fertigstellung manuell ohne Zuhilfenahme von Werkzeugen wieder entfernt ("abgezogen") werden kann. Dies kann überraschenderweise bereits bei Raumtemperatur durchgeführt werden. Dies ist bei konventionellen Primern bzw. bei Direktbeschichtung des Untergrunds nicht der Fall. Durch Erwärmen, z. B. mit einer Heißluftpistole, kann die zur Enthaftung benötigte Kraft noch reduziert werden. Bei großen Flächen kann es von Vorteil sein, diese vor dem Abziehen des Bodens durch Einschneiden in Streifen zu partitionieren.

Je nach Alter und Größe der Altbodenfläche können selbst mit dem Schmelzkleber-Primer größere Kräfte zum Entfernen nötig sein. Hier hilft die Option des Erwärmens und somit die Verringerung der Zugkraft.

Der erfindungsgemäße Bodenaufbau eignet sich z.B. in privaten, öffentlichen oder gewerblichen Räumen, z.B. Wohnräumen, Krankenhäusern, Schulen, Werkräumen, Einkaufshäusern, Büros, Lagerhallen, Garagen, Parkhäusern, Tiefgaragen, Produktions- und Industriehallen, Werkstätten, Ausstellungsflächen. Die Bodenbelag ist oder umfasst bevorzugt mindestens eine Kunstharzschicht oder ein Flächenmaterial, das mit einer voll- oder teilflächigen Klebschicht angebunden ist. Der Bodenaufbau eignet sich besonders als Fußboden.

In den Fig. 1 bis 7 sind erfindungsgemäße Bodenaufbauten gezeigt. Die Fig. zeigen den Aufbau lediglich schematisch und sind nicht maßstabsgetreu. Zusätzliche Schichten sind möglich. Die Schichten Vorgrundierung 4, Schmelzkleber-Grundierung 2, Bodenbeschichtung 3, Klebschicht 5 und Versiegelung 7 sind in den Fig. jeweils als einschichtiges System dargestellt. Sie können aber jeweils unabhängig voneinander auch aus zwei oder mehr aufeinander aufgebrachten Schichten bestehen. Bei den Schichten Vorgrundierung 4 und Versiegelung 7 handelt es sich jeweils um optionale Schichten, die auch weggelassen werden können.
Fig. 1 zeigt einen Bodenaufbau aus einem Untergrund 1, einer darüber befindlichen Schmelzkleber-Grundierung 2 und einem Bodenbelag 3. Der Bodenbelag 3 ist vorzugsweise eine Bodenbeschichtung 3, z.B. mindestens eine Kunstharzschicht. Besonders bevorzugt handelt es sich um einen Kunstharzboden mit mindestens einer Kunstharzschicht. Die Bodenbeschichtung 3 kann eine oder mehrere Kunstharzschichten enthalten.
Fig. 2 zeigt einen Bodenaufbau wie in Fig. 1, wobei zusätzlich eine Vorgrundierung 4 zwischen Untergrund 1 und Schmelzkleber-Schicht 2 angeordnet ist.
Fig. 3 zeigt einen Bodenaufbau wie in Fig. 1, wobei der Bodenbelag 3 aus einer Klebschicht 5 und einem Flächenmaterial 6 gebildet ist. Es können auch zwei oder mehr Klebschichten vorhanden sein.
Fig. 4 zeigt einen Bodenaufbau wie in Fig. 3, wobei zusätzlich eine Vorgrundierung 4 zwischen Untergrund 1 und Schmelzkleber-Schicht 2 angeordnet ist.
Fig. 5 zeigt einen Bodenaufbau auf einem Substrat 1 mit einer Vorgrundierung 4 (optional), einer Schmelzkleber-Grundierung 2, einem Bodenbelag aus einer Bodenbeschichtung 3, z.B. eine oder mehrere Kunstharzschichten, und eine Versiegelung 7 (optional) in dieser Reihenfolge.
Fig. 6 zeigt einen Bodenaufbau auf einem Substrat 1 mit einer Vorgrundierung 4 (optional), einer Schmelzkleber-Grundierung 2 und einem Bodenbelag 3 aus einer vollflächig applizierten Klebschicht 5 und einem Flächenmaterial 6 in dieser Reihenfolge.
Fig. 7 zeigt einen Bodenaufbau auf einem Substrat 1 mit einer Vorgrundierung 4 (optional), einer Schmelzkleber-Grundierung 2 und einem Bodenbelag 3 aus einer teilflächig applizierten Klebschicht 5 und einem Flächenmaterial 6 in dieser Reihenfolge. Die teilflächig applizierte Klebschicht 5 ist in Form von Klebstoffraupen appliziert.

### Beispiele

### Beispiele 1 und 2 und Vergleichsbeispiele 1 bis 4

Es wurden Bodenaufbauten auf einem Untergrund aus Faserzement hergestellt. Als Grundierung wurden folgende Handelsprodukte in den angegebenen Auftragsmengen eingesetzt.

| Kürzel | Handelprodukt | Auftragsmenge [g/m²] |
|---|---|---|
| SK | Schmelzkleberstick Cristal^{®}, Steinel 048419 Klebestick, Schmelzkleber auf Basis von Ethylen-Vinylacetat-Copolymer | 12 (trocken) |
| AT | Acryl Tiefengrund, Hornbach, Acrylatdispersion | 160 |
| 2540 | Sikafloor-2540 W weiß, Sika Deutschland GmbH, zweikomponentige Epoxidharz-Dispersion | 220 |
| KK | Kork-Kontakt, Bostik GmbH, wasserdispergierter Latexklebstoff | 300 |
| TF | Teppich-Fixierung, Bostik GmbH, wässrige Klebstoffdispersion | 250 |

Für den Schmelzkleber SK bezieht sich die Auftragsmenge auf das Trockengewicht. Für den Auftrag wurden 14 g des Schmelzklebersticks Cristal in 86 g Xylol/Butanol (3:1 Vol./Vol.) gelöst und die Lösung auf den Untergrund aufgebracht. Anschließend wurde bis zur vollständigen Verdunstung des Lösungsmittels gewartet.

Bei allen anderen Produkten zur Grundierung beziehen sich die angegebenen Auftragsmengen auf das aufzubringende flüssige oder pastöse Grundierungsmittel. Sie wurden auf übliche Weise auf den Untergrund aufgebracht.

Als Bodenbeschichtung wurde ein elastisches selbstverlaufendes zweikomponentiges Polyurethan-Reaktionsharz (Kürzel: PU-Harz) verwendet. Zum anderen wurde als Verklebung SikaBond-52 Parquet^{®}, Sika Deutschland GmbH, ein pastenförmiger feuchtigkeitshärtender einkomponentiger Polyurethan-Kleber eingesetzt. Der Kleber wurde teilflächig in Form von Klebstoffraupen appliziert. Die Verklebung wurde ohne damit zu verklebendem Flächenmaterial geprüft.

Nach Fertigstellung der Beschichtungen wurde ihre Ablösbarkeit vom Untergrund geprüft. Die Bodenbeschichtung bzw. die Klebstoffraupe wurde an einem Ende mit einem Messer vom Untergrund gelöst und sodann mit der Hand am enthafteten Stück senkrecht nach oben abgezogen.

Tabelle 1 zeigt weitere Einzelheiten zu den hergestellten Beschichtungen und Ergebnisse zur Ablösung. Die Auftragsmenge der Bodenbeschichtung und der Verklebung bezieht sich auf die eingesetzte flüssige bzw. pastöse Beschichtungszusammensetzung bzw. Klebstoffzusammensetzung.

**Tabelle 1. Untergrund Faserzement**

| | Grundierung | Beschichtung | Auftragsmenge Beschichtung [kg/m²] | Ergebnis Ablösung |
|---|---|---|---|---|
| Bsp. 1 | SK | PU-Harz | 2,8 | leicht; Teile des Faserzements lösen sich ab |
| Vgl.bsp. 1 | AT | PU-Harz | 2,8 | Kraft erforderlich; teilweise Kohäsionsbruch Faserzement |
| Vgl.bsp. 2 | 2540 | PU-Harz | 2,8 | Kraft erforderlich; teilweise Kohäsionsbruch Faserzement, Beschichtung bricht teilweise |
| Vgl.bsp. 3 | KK | PU-Harz | 2,8 | große Kraft erforderlich |
| Vgl.bsp. 4 | TF | PU-Harz | 2,8 | nicht möglich, Kohäsionsbruch Faserzement |
| Bsp. 2 | SK | SikaBond-52 Parquet | 2,4 | sehr leicht |

### Beispiele 3 und 4

Es wurden Bodenaufbauten auf einer Spanplatte als Untergrund hergestellt. Die Spanplatten wurden mit einer Vorgrundierung versehen. Als Vorgrundierung wurde Sikafloor^{®}-161, Sika Deutschland GmbH, eine zweikomponentige Epoxidharz-Grundierung in einer Auftragsmenge von 500 g/m² auf die Spanplatte aufgebracht.

Als Grundierung wurden jeweils der Schmelzkleber SK auf die gleiche Weise wie in Beispiel 1 gelöst und in einer Auftragsmenge von 12 g/m² (Trockengewicht) aufgebracht.

In Beispiel 3 wurde wie in Beispiel 1 für die Kunstharzbeschichtung das PU-Harz verwendet. In Beispiel 4 wurde wie in Beispiel 2 als Verklebung SikaBond-52 Parquet^{®} mittels Raupenauftrag verwendet. Nach Fertigstellung der Beschichtungen wurde ihre Ablösbarkeit vom Untergrund wie in Beispiel 1 geprüft. Tabelle 2 zeigt weitere Einzelheiten zu den hergestellten Beschichtungen und Ergebnisse zur Ablösung.

**Tabelle 2. Untergrund Spanplatte vorgrundiert mit Sikafloor®-161**

| | Grundierung | Beschichtung | Auftragsmenge Beschichtung [kg/m²] | Ergebnis Ablösung |
|---|---|---|---|---|
| Bsp. 3 | SK | PU-Harz | 2,8 | leicht; Erwärmung mit Heizpistole erleichtert Ablösung zusätzlich |
| Bsp. 4 | SK | SikaBond-52 Parquet | 2,4 | leicht |

### Beispiele 5 und 6

Es wurden Beschichtungsaufbauten auf sandgestrahlten Betonplatten als Untergrund hergestellt. Die Betonplatte für Beispiel 6 wurde mit einer Vorgrundierung versehen. Als Vorgrundierung wurde Sikafloor^{®}-161 in einer Auftragsmenge von 500 g/m² auf die Betonplatte aufgebracht. Als Grundierung wurden jeweils der Schmelzkleber SK auf die gleiche Weise wie in Beispiel 1 gelöst und in einer Auftragsmenge von 12 g/m² (Trockengewicht) aufgebracht.

Als Bodenbeschichtung wurde wie in Beispiel 1 jeweils für die Kunstharzschicht das PU-Harz verwendet. Nach Fertigstellung der Bodenbeschichtungen wurde ihre Ablösbarkeit vom Untergrund wie in Beispiel 1 geprüft. Tabelle 3 zeigt weitere Einzelheiten zu den hergestellten Beschichtungen und Ergebnisse zur Ablösung.

**Tabelle 3. Untergrund sandgestrahlter Beton**

| | Grundierung | Beschichtung | Auftragsmenge Beschichtung [kg/m²] | Ergebnis Ablösung |
|---|---|---|---|---|
| Bsp. 5 | SK | PU-Harz | 1 | Kraft erforderlich; Beschichtung bricht |
| Bsp. 6* | SK | PU-Harz | 3 | Kraft erforderlich |

| | | | | |
|---|---|---|---|---|
| *vorgrundiert mit Sikafloor^{®}-161 | | | | |

Selbst bei rauen Untergründen wie sandgestrahltem Beton wird durch die Schmelzkleber-Grundierung eine Ablösung der Beschichtung möglich. Bei sehr dünnen Beschichtungen kann dies wegen des erforderlichen Kraftaufwands zum Bruch der Beschichtung führen. Hier kann der Ablösevorgang gegebenenfalls durch Erwärmen unterstützt werden. Bei dickeren Schichten ist ein Abziehen bei Raumtemperatur ohne Bruch der Beschichtung möglich.

### Vergleichsbeispiel 5

Das Beispiel 5 wurde wiederholt, außer dass die Schmelzkleber-Grundierung durch eine Epoxygrundierung mit Sikafloor^{®}-161 ersetzt wurde. Für Beispiel 5 und Vergleichsbeispiel 5 wurde jeweils die erforderlich Kraft bei Stirnabzug, d.h. senkrechtem Abzug, ermittelt.

Für Beispiel 5 mit Schmelzkleber-Grundierung ergab sich ein Wert von 1,21 N/mm², während für Vergleichsbeispiel 5 mit Epoxygrundierung ein Wert von 2,45 N/mm² erhalten wurde.

### Bezugszeichenliste

- 1: Untergrund
- 2: Schmelzkleber-Grundierung
- 3: Bodenbelag bzw. Bodenbeschichtung
- 4: Vorgrundierung
- 5: Klebschicht
- 6: Flächenmaterial
- 7: Versiegelung

## Patentansprüche

1. Bodenaufbau auf einem Untergrund (1) umfassend eine Grundierung (2) und einen über der Grundierung befindlichen Bodenbelag (3) umfassend eine Bodenbeschichtung und/oder eine Verklebung, **dadurch gekennzeichnet, dass** die Grundierung (2) aus einem Schmelzkleber ist.

2. Bodenaufbau nach Anspruch 1, wobei der Bodenbelag (3) als Bodenbeschichtung oder Verklebung mindestens eine Schicht, insbesondere eine Kunstharzschicht oder Klebschicht, umfasst oder ist, die durch Auftragen und Härten eines flüssigen oder pastösen Materials gebildet ist, wobei eine Klebschicht als Schicht vollflächig oder teilflächig aufgebracht werden kann.

3. Bodenaufbau nach Anspruch 1 oder 2, wobei die Bodenbeschichtung oder Verklebung unmittelbar über der Grundierung (2) aus Schmelzkleber angeordnet ist.

4. Bodenaufbau nach einem der Ansprüche 1 bis 3, wobei der Bodenbelag (3) als Bodenbeschichtung mindestens eine Kunstharzschicht umfasst oder ist oder als Verklebung mindestens eine vollflächig oder teilflächig applizierte Klebschicht (5) umfasst.

5. Bodenaufbau nach einem der Ansprüche 1 bis 4, wobei der Bodenbelag (3) als Bodenbeschichtung eine oder mehrere Kunstharzschichten umfasst, wobei der Bodenbelag (3) bevorzugt ein Kunstharzboden ist, oder
der Bodenbelag (3) als Verklebung mindestens eine vollflächig oder teilflächig aufgebrachte Klebschicht (5) und ein über der Klebschicht angeordnetes Flächenmaterial (6) umfasst, wobei der Bodenbelag (3) bevorzugt ein verklebter Parkettboden ist.

6. Bodenaufbau nach einem der Ansprüche 1 bis 5, wobei eine Vorgrundierung (4) zwischen dem Untergrund (1) und der Grundierung (2) aus Schmelzkleber angeordnet ist und/oder über dem Bodenbelag (3) eine Versiegelung (7) angeordnet ist.

7. Bodenaufbau nach einem der Ansprüche 1 bis 6, wobei die Auftragsmenge der Grundierung (2) aus Schmelzkleber, bezogen auf das Trockengewicht, im Bereich von 5 bis 500 g/m² liegt.

8. Bodenaufbau nach einem der Ansprüche 1 bis 7, wobei der Bodenbelag (3) eine Schichtdicke von mindestens 0,5 mm aufweist.

9. Bodenaufbau nach einem der Ansprüche 1 bis 8, wobei der Schmelzkleber ein Ethylen-Vinylacetat-Copolymer, Polyolefin, Polyester oder Polyamid enthält.

10. Bodenaufbau nach einem der Ansprüche 1 bis 9, wobei der Untergrund aus Estrich, Beton, Zement, Faserzement, Holz, Fliesen, Glas, Trockenestrich, Gussasphalt oder einer Altbeschichtung ist.

11. Verwendung eines Schmelzklebers als Grundierung oder Beschichtung eines Untergrundes bei der Herstellung eines Bodenaufbaus auf dem Untergrund mit einem Bodenbelag umfassend eine Bodenbeschichtung oder eine Verklebung.

12. Verwendung nach Anspruch 11, um einen ablösbaren oder abziehbaren Bodenbelag zu erhalten.

13. Verfahren zur Herstellung eines Bodenaufbaus auf einem Untergrund nach einem der Ansprüche 1 bis 10, umfassend
a) Grundierung des Untergrunds mit einem Schmelzkleber und
b) Aufbringen eines Bodenbelags umfassend eine Bodenbeschichtung und/oder eine Verklebung auf die Grundierung,
wobei der Untergrund gegebenenfalls vor der Grundierung mit dem Schmelzkleber mit einer Vorgrundierung versehen wird und/oder gegebenenfalls der Bodenbelag mit einer Versiegelung versehen wird.

14. Verfahren nach Anspruch 13, wobei das Aufbringen des Bodenbelags umfasst
b1) Auftragen einer Reaktionsharz-Beschichtungszusammensetzung auf die Schmelzkleberschicht und Härten unter Bildung einer Kunstharzschicht oder
b2) vollflächiges oder teilflächiges Auftragen eines Klebers auf die Schmelzkleberschicht und Aufkleben eines Flächenmaterials auf die vollflächige oder teilflächige Klebschicht.

15. Verfahren zum Entfernen eines Bodenbelags von einem Untergrund bei einem Bodenaufbau nach einem der Ansprüche 1 bis 10, umfassend das Enthaften der Bodenbeschichtung oder der Verklebung von der Grundierung aus Schmelzkleber durch Abhebein und/oder Abziehen, vorzugsweise manuelles Abziehen, der Bodenbeschichtung oder Verklebung, wobei das Enthaften gegebenenfalls durch Erwärmen unterstützt wird.
